# EUROPÄISCHE PATENTSCHRIFT

(11) **EP 1 242 208 B1**
(45) Veröffentlichungstag und Bekanntmachung des Hinweises auf die Patenterteilung: **24.03.2004**
(21) Anmeldenummer: 00982750.2
(22) Anmeldetag: 07.12.2000
(51) Int. Cl.: B23D 65/00, B23K 26/073

(54) **VERFAHREN ZUM BEFESTIGEN EINES HARTMETALLZAHNES AN EINEM SÄGEBLATT**
METHOD FOR FIXING A HARD METAL TOOTH TO A SAW BLADE
PROCEDE POUR FIXER UNE DENT EN METAL DUR SUR UNE LAME DE SCIE

(30) Priorität: 27.12.1999 AT 218599
(43) Veröffentlichungstag der Anmeldung: 25.09.2002
(73) Patentinhaber: Wintersteiger G.m.b.H., 4910 Ried im Innkreis (AT)
(72) Erfinder: NÖBAUER, Franz, A-4941 Mehrnbach (AT); LIEDL, Gerhard, A-1100 Wien (AT)
(74) Vertreter: Hübscher, Helmut, Dipl.-Ing.
(86) Internationale Anmeldenummer: PCT/AT2000/000330
(87) Internationale Veröffentlichungsnummer: WO 2001/053028

(56) Entgegenhaltungen:
- EP-A- 0 754 519
- DE-A- 4 339 661

## Beschreibung

### Technisches Gebiet

Die Erfindung bezieht sich auf ein Verfahren zum Befestigen eines Hartmetallzahnes an einem Sägeblatt gemäß dem Oberbegriff von Anspruch 1, wobei der entsprechend der Sägezahngeometrie bearbeitete Hartmetallzahn stumpf an die vorbereitete, stimseitige Stoßfläche des Sägeblattes angehalten und dann mit dem Sägeblatt unter Wärmezufuhr entlang des Stoßes zwischen Sägeblatt und Hartmetallzahn verbunden wird (siehe beispielsweise EP 0754 519).

### Stand der Technik

Um beispielsweise beim Sägen von Holzlamellen die Holzverluste zufolge der Sägezerspanung klein halten und dadurch den Holzwerkstoff besser nutzen zu können, werden möglichst dünne Schnittfugen angestrebt, die entsprechend dünne Sägeblätter verlangen. Bei solchen dünnen Sägeblättern lassen sich allerdings die Vorteile von nachschärfbaren Hartmetallzähnen nicht nützen, weil die übliche Befestigung von Hartmetallzähnen am Sägeblatt durch ein Hartlöten keine ausreichende Festigkeit mit sich bringt, um ein Schneiden in einem inhomogenen Holzwerkstoff ohne Zahnausbruch sicherstellen zu können. Es ist zwar bereits bekannt, Hartmetallrohlinge in Kugel- oder Zylinderform an den Zahnspitzen von Sägeblättern durch ein Widerstandsschweißen zu befestigen, doch bedingen diese Hartmetallrohlinge eine aufwendige Schleifbearbeitung, um die gewünschte Zahngeometrie zu erreichen. Da die Hartmetallrohlinge beim Widerstandsschweißen fest an die Stoßflächen der Sägeblätter angepreßt werden müssen, ist wegen des Werkstoffaufschmelzens im Stoßbereich eine genaue Positionierung der Hartmetallrohlinge gegenüber dem Sägezahn unmöglich, was einerseits die Kugel- oder Zylinderform der Hartmetallrohlinge erfordert und anderseits den Einsatz von Hartmetallzähnen ausschließt, die bereits vor dem Anschweißen entsprechend der späteren Zahngeometrie bearbeitet werden. Damit der Schleifaufwand zur Nachbearbeitung der angeschweißten Hartmetallrohlinge vergleichsweise klein gehalten werden kann, werden lediglich die Zahnspitzen aus Hartmetall gefertigt, so daß ein Nachschärfen solcher Sägen mit angeschweißten Sägezahnspitzen aus Hartmetall kaum möglich ist.

### Darstellung der Erfindung

Der Erfindung liegt somit die Aufgabe zugrunde, ein Verfahren zum Befestigen eines Hartmetallzahnes an einem Sägeblatt der eingangs geschilderten Art so auszugestalten, daß eine ausreichend feste Verbindung zwischen dem Sägeblatt und dem Hartmetallzahn hergestellt werden kann, und zwar bei einer ausreichend genauen Positionierung des Hartmetallzahnes, um entsprechend der Sägezahngeometrie bearbeitete Hartmetallzähne einsetzen zu können, die aufwendige Nachbearbeitungen überflüssig machen.

Die Erfindung löst die gestellte Aufgabe durch ein Verfahren gemäß Anspruch 1.

Durch den Einsatz eines ausreichend leistungsstarken Laserstrahles erübrigt sich beim Schweißvorgang ein Anpressen des Hartmetallzahnes an die zugehörige Stoßfläche des Sägeblattes, so daß der Hartmetallzahn vor dem Schweißen entsprechend der Sägezahngeometrie bearbeitet und in einer vorgegebenen Lage genau mit dem Sägeblatt verbunden werden kann. Der Schweißvorgang läuft dabei in einfacher Weise ab, weil der Hartmetallzahn aufgrund der besonderen Brennfleckausbildung des Laserstrahles über die gesamte Stoßlänge gleichzeitig am Sägeblatt angeschweißt wird, was zu einer über die Stoßlänge weitgehend gleichmäßigen Wärmebelastung des Hartmetallzahnes und des Sägeblattes mit der Wirkung führt, daß sich eine ausreichend feste Verbindung zwischen dem Hartmetallzahn und dem Sägeblatt bei einer sehr geringen Rißgefahr ergibt, und zwar mit einem vergleichsweise geringen Schweißaufwand, weil ja der Laserstrahl keiner Verlagerung in Richtung des Stoßes zwischen Hartmetallzahn und Sägeblatt bedarf. Es stellen sich daher einem Punktschweißen vergleichbare Verhältnisse ein, wobei jedoch der Schweißbereich nicht örtlich auf einen Stoßabschnitt beschränkt wird, sondern sich über die gesamte Stoßlänge erstreckt. Die angestrebte, im wesentlichen linsenförmige Brennfleckform kann bei einer gegebenen Querschnittsform des Laserstrahles über eine entsprechende Optik ohne Schwierigkeiten sichergestellt werden.

Da der gesamte Schweißbereich für einen Hartmetallzahn durch den entsprechend ausgebildeten Brennfleck des Laserstrahles erfaßt wird, kann das Sägeblatt und der Hartmetallzahn in weiterer Ausbildung der Erfindung im Bereich des Stoßes vor dem Schweißen durch den Laserstrahl selbst mit verringerter Leistung vorgewärmt werden, wodurch die Rißgefahr weiter herabgesetzt werden kann.

Zum Abbau thermischer Spannungen ist es beim Schweißen üblich, die Schweißverbindung einer thermischen Nachbehandlung auszusetzen. Zu diesem Zweck kann der Schweißbereich zwischen dem Sägeblatt und dem Hartmetallzahn nach dem Schweißvorgang ebenfalls durch den Laserstrahl mit verringerter Leistung nachgeglüht werden, so daß zur Fertigstellung der Säge die angeschweißten Hartmetallzähne lediglich durch einen Schleifvorgang nachgeschärft werden müssen.

### Kurze Beschreibung der Zeichnung

Anhand der Zeichnung wird das erfindungsgemäße Verfahren zum Befestigen eines Hartmetallzahnes an einem Sägeblatt näher erläutert. Es zeigen
- Fig. 1: eine Vorrichtung zur Durchführung des Verfahrens in einer schematischen Seitenansicht und
- Fig. 2: eine Säge mit zum Teil angeschweißten Hartmetallzähnen in einer vereinfachten Draufsicht.

### Weg zur Ausführung der Erfindung

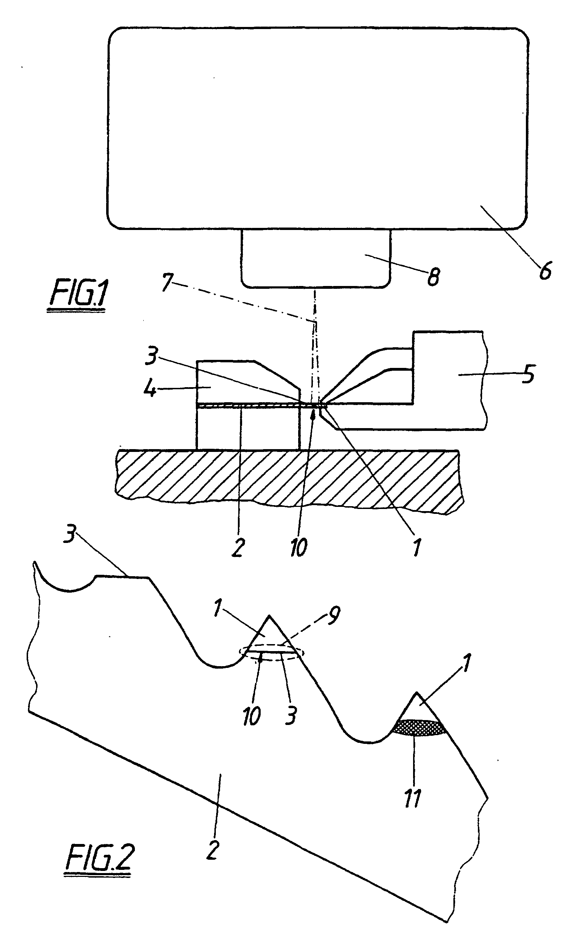

Das mit Hartmetallzähnen 1 zu versehende Sägeblatt 2, das als Einzelblatt, Band oder Scheibe vorliegen kann, je nach dem ob ein Gatter-, Band- oder ein Kreissägeblatt gefertigt wird, weist vorbereitete Stoßflächen 3 zum Anschweißen der Hartmetallzähne 1 auf, die bereits die spätere Zahngeometrie aufweisen. Damit die einzelnen Hartmetallzähne 1 gegenüber den Stoßflächen 3 des Sägeblattes 2 für den Schweißvorgang genau ausgerichtet werden können, wird das Sägeblatt 2 gemäß der Fig. 1 in einer Halterung 4 so eingespannt, daß die Stoßfläche 3, an der der jeweilige Hartmetallzahn 1 angeschweißt werden soll, einer Positionierzange 5 gegenüberliegt, mit deren Hilfe der jeweilige Hartmetallzahn 1 stumpf an die stimseitige Stoßfläche 3 des Sägeblattes 2 angestellt und schweißgerecht festgehalten werden kann. Der in dieser Weise gegenüber dem Sägeblatt 2 bzw. der Stoßfläche 3 ausgerichtete Hartmetallzahn 1 wird dann mit Hilfe einer Laser-Schweißeinrichtung 6 an der Stoßfläche 3 des Sägeblattes 2 angeschweißt. Zu diesem Zweck wird der Laserstrahl 7 über eine Optik 8 so gebündelt, daß ein Brennfleck 9 entsteht, wie er in der Fig. 2 strichliert angedeutet ist. Dieser im wesentlichen linsenförmige Brennfleck 9 erstreckt sich über die gesamte Länge des sich zwischen einem Hartmetallzahn 1 und der Stoßfläche 3 ergebenden Stoßes 10, so daß bei einem Punktschweißen vergleichbaren Verhältnissen die Schweißverbindung gleichzeitig über die gesamte Stoßlänge hergestellt wird. Die dadurch bedingte über die Stoßlänge weitgehend gleichmäßige Temperaturbelastung vermindert die Rißgefahr zufolge von Wärmespannungen und stellt eine allen Anforderungen genügende Befestigung der Hartmetallzähne 1 an einem Sägeblatt 2 auch dann sicher, wenn das Sägeblatt 2 sehr dünn ausgebildet wird, um die Schnittfugen kleinzuhalten. Der sich aufgrund der gewählten Brennfleckausbildung ergebende Schweißbereich zwischen den Hartmetallzähnen 1 und dem Sägeblatt 2 ist in Fig. 2 schematisch durch eine Kreuzschraffur 11 angedeutet.

Der sich über den gesamten Schweißbereich 11 erstreckende Brennfleck 9 bietet die vorteilhafte Möglichkeit, über den Laserstrahl 7 eine zusätzliche Wärmebehandlung bei verringerter Leistung vorzunehmen. So kann über den Laserstrahl 7 der spätere Schweißbereich 11 vorgewärmt werden, um die Rissgefahr zufolge von Wärmespannungen weiter herabzusetzen. Außerdem kann nach dem Schweißvorgang der Schweißbereich 11 nachgeglüht werden, um vorhandene Wärmespannungen abzubauen. Es braucht daher lediglich die Leistung der Laserschweißeinrichtung 6 entsprechend geregelt zu werden, um vor dem Schweißen den späteren Schweißbereich 11 vorzuwärmen und dann bei voller Laserleistung die Schweißung durchzuführen, bevor eine nachträgliche Wärmebehandlung wieder mit verringerter Leistung vorgenommen wird.

## Patentansprüche

1. Verfahren zum Befestigen eines Hartmetallzahnes (1) an einem Sägeblatt (2), wobei der entsprechend der Sägezahngeometrie bearbeitete Hartmetallzahn (1) stumpf an die vorbereitete, stirnseitige Stoßfläche (3) des Sägeblattes (2) angehalten und dann mit dem Sägeblatt unter Wärmezufuhr entlang des Stoßes (10) zwischen Sägeblatt (2) und Hartmetallzahn (1) verbunden wird, **dadurch gekennzeichnet, daß** der Hartmetallzahn mit Hilfe eines sich über die gesamte Stoßlänge erstreckenden, im wesentlichen linsenförmigen Brennfleckes eines Laserstrahles am Sägeblatt angeschweißt wird.

2. Verfahren nach Anspruch 1, **dadurch gekennzeichnet, daß** das Sägeblatt und der Hartmetallzahn im Bereich des Stoßes vor dem Schweißen durch den Laserstrahl mit verringerter Leistung vorgewärmt wird.

3. Verfahren nach Anspruch 1 oder 2, **dadurch gekennzeichnet, daß** der Schweißbereich nach dem Schweißvorgang durch den Laserstrahl mit verringerter Leistung nachgeglüht wird.

## Claims

1. A method of fixing a hard metal tooth (1) on a saw blade (2), wherein the hard metal tooth (1) machined according to the saw tooth geometry is held in abutment against the prepared end face junction surface (3) of the saw blade (2) and is then connected to the saw blade with a supply of heat along the junction (10) between the saw blade (2) and the hard metal tooth (1), **characterised in that** the hard metal tooth is welded on the saw blade by means of a substantially lenticular focal spot of a laser beam extending over the entire junction length.

2. A method according to claim 1, **characterised in that** the saw blade and the hard metal tooth are preheated in the region of the junction before welding by the laser beam with reduced power.

3. A method according to claim 1 or 2, **characterised in that** the welding zone is post-annealed after the welding operation by the laser beam with reduced power.

## Revendications

1. Procédé de fixation d'une dent (1) en métal dur sur une lame de scie (2), la dent (1) en métal dur, usinée de manière correspondante à la géométrie de la dent de scie, étant immobilisée par raboutement sur la face de joint (3) frontale préparée de la lame de scie (2) et, ensuite, reliée à la lame de scie avec apport de chaleur, le long du joint (10), entre la lame de scie (2) et la dent (1) en métal dur, **caractérisé en ce que** la dent en métal dur est rapportée par soudage sur la lame de scie, à l'aide d'une tache focale sensiblement lenticulaire s'étendant sur l'ensemble de la longueur du joint, d'un rayon laser.

2. Procédé selon la revendication 1, **caractérisé en ce que** la lame de scie et la dent en métal dur sont préchauffées dans la zone du joint, avant le soudage, au moyen du rayon laser utilisé à puissance réduite.

3. Procédé selon la revendication 1 ou 2, **caractérisé en ce que** la zone de soudure est recuite après le processus de soudage, en utilisant le rayon laser dont la puissance est réduite.
